# EUROPÄISCHE PATENTSCHRIFT

(11) **EP 1 599 659 B1**
(45) Veröffentlichungstag und Bekanntmachung des Hinweises auf die Patenterteilung: **27.04.2011**
(21) Anmeldenummer: 04712511.7
(22) Anmeldetag: 19.02.2004
(51) Int. Cl.: F01M 1/00, F16N 39/00, F01M 1/12, F01M 11/00, B01D 19/00

(54) **VORRICHTUNG ZUR ENTSCHÄUMUNG VON ÖL IM SCHMIERMITTELKREISLAUF EINER BRENNKRAFTMASCHINE**
DEVICE FOR DEFOAMING OIL IN THE LUBRICANT CIRCUIT OF AN INTERNAL COMBUSTION ENGINE
DISPOSITIF POUR DEMOUSSER DE L'HUILE DANS UN CIRCUIT DE LUBRIFIANT D'UN MOTEUR A COMBUSTION INTERNE

(30) Priorität: 28.02.2003 DE 10308761
(43) Veröffentlichungstag der Anmeldung: 30.11.2005
(73) Patentinhaber: Dr. Ing. h.c. F. Porsche AG, 70435 Stuttgart (DE)
(72) Erfinder: UNFRIED, Claus-Dieter, 71706 Markgröningen (DE); HÜLSEMANN, Ulrich, 75242 Neuhausen (DE); LAUDENBACH, Thomas, 74385 Pleidelsheim (DE)
(86) Internationale Anmeldenummer: PCT/EP2004/001591
(87) Internationale Veröffentlichungsnummer: WO 2004/076824

(56) Entgegenhaltungen:
- DE-A- 4 118 557
- GB-A- 541 790
- US-A- 4 048 067
- US-A1- 2002 053 489
- US-B1- 6 332 444
- PATENT ABSTRACTS OF JAPAN Bd. 1996, Nr. 09, 30. September 1996 (1996-09-30) & JP 8 135419 A (KAWASAKI HEAVY IND LTD), 28. Mai 1996 (1996-05-28)

## Beschreibung

Die Erfindung geht aus von einer Vorrichtung zur Entschäumung von Öl im Schmiermittelkreislauf einer Brennkraftmaschine gemäß den Merkmalen des Oberbegriffs des Anspruchs 1.

Aus dem Stand der Technik (siehe z. B. DE 74 43 014 Z1) ist es bekannt, bei einer Brennkraftmaschine mit Trockensumpfschmierung das in einen separaten Öltank geförderte Schmieröl durch entsprechende Ölabscheideeinrichtungen zu entschäumen bzw. zu entlüften.

Aufgabe der Erfindung ist es, derartige Ölabscheidevorrichtungen in ihrem Wirkungsgrad zu verbessern, so dass nur noch ein geringer Restgasgehalt im Schmieröl verbleibt. Damit kann insbesondere bei Sportwagen, bei denen hohe Quer- und Längsbeschleunigungen auftreten, eine sichere und zuverlässige Schmierölversorgung der entsprechenden Verbraucher sicher gestellt werden.

Die Aufgabe wird durch die im Anspruch 1 angegebenen Merkmale gelöst.

Der im Ölabscheider vorgesehene Drahtgeflechtkörper stellt eine effektive und intensive Abscheidung der ölhaltigen Gase sicher, wobei die durch den Drahtgeflechtkörper aufgefangenen Ölbestandteile wieder zurück in den Öltank gelangen, während die vom Öl gereinigten Gase im geschlossenen Kreislauf der Sauganlage der Brennkraftmaschine wieder zuführbar sind.

Durch die in den Unteransprüchen angegebenen Merkmale sind weitere vorteilhafte Ausgestaltungen und Weiterbildungen der erfindungsgemäßen Vorrichtung möglich.

Um eine möglichst große Oberfläche für den Drahtgeflechtkörper zu erreichen ohne die Aussenabmessungen des Ölabscheiders zu vergrößern wird vorgeschlagen, den Drahtgeflechtkörper trichter- bzw. kegelförmig auszubilden. Darüber hinaus gewährleistet diese Geometrie des Drahtgeflechtkörpers auch eine besonders effektive Ölabscheidung, wenn die ölhaltigen Gase den Ölabscheider durchströmen.

Um eine gezielte Durchströmung der ölhaltigen Gase durch den Drahtgeflechtkörper sicher zu stellen, ist letzterer in einem Entlüftungsrohr aufgenommen, welches auf zumindest seinen beiden Stirnseiten mit Öffnungen versehen ist.

Der sich oberhalb des Drahtgeflechtkörpers bzw. des Entlüftungsrohres ausbildende Teil - Entlüftungsraum ist auf vorteilhafte Art und Weise an eine Unterdruckquelle, z. B. dem Ansaugrohr der Brennkraftmaschine, angeschlossen.

Einen weiteren Aspekt der Erfindung betrifft den Vorschlag, das Gehäuse des Ölabscheiders so auszubilden, dass über diese Baueinheit gleichzeitig eine Befüllung des Öltanks mit Schmieröl möglich ist. Dazu ist koaxial zum Entlüftungsraum ein Ringkanal vorgesehen, der mit einem Öleinfüllstutzen verbunden ist. Damit kann auf zusätzliche Öleinfüllstutzen, die normalerweise über entsprechende Leitungsabschnitte mit der eigentlichen Ölwanne der Brennkraftmaschine verbunden sind, verzichtet werden.

Es wird weiterhin vorgeschlagen, den Öltank im Getriebegehäuse zu integrieren. Da der Öltank am oberen Ende des Getriebegehäuses platziert ist, kann problemlos Schmieröl über den Öleinfüllstutzen nachgefüllt werden.

Ein Ausführungsbeispiel der Erfindung wird nachfolgend anhand der Beschreibung sowie den Zeichnungen näher erläutert.

Es zeigen:

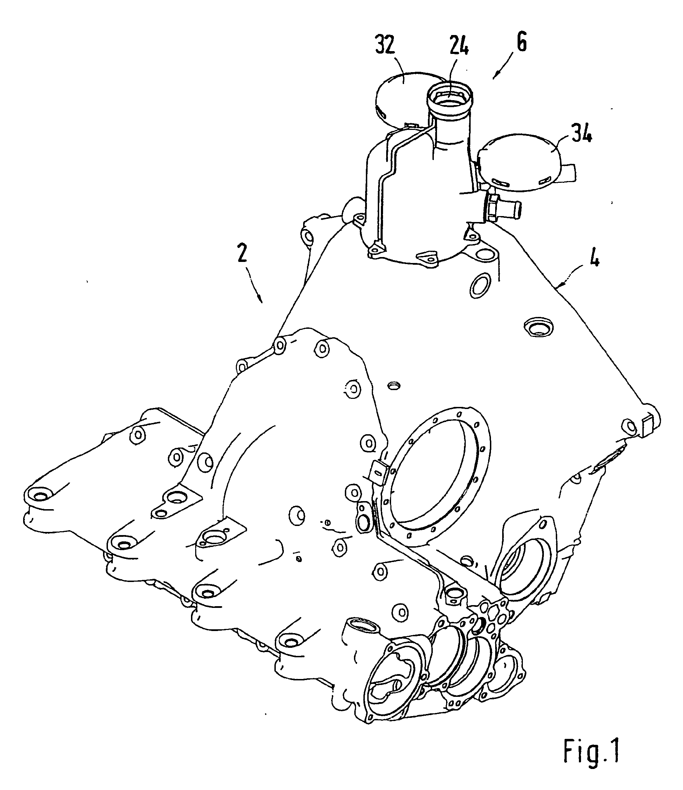

- Fig. 1: ein Getriebegehäuse mit Öltank und einer Ölabscheidevorrichtung,

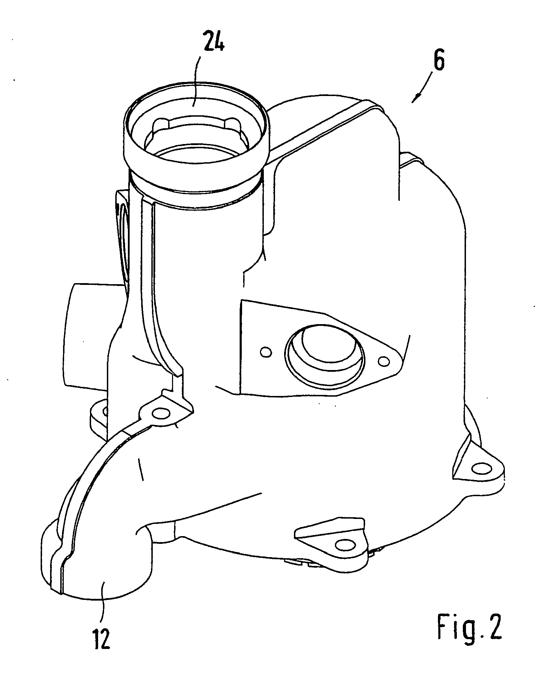

- Fig. 2: die Ölabscheidevorrichtung in Perspektivansicht,

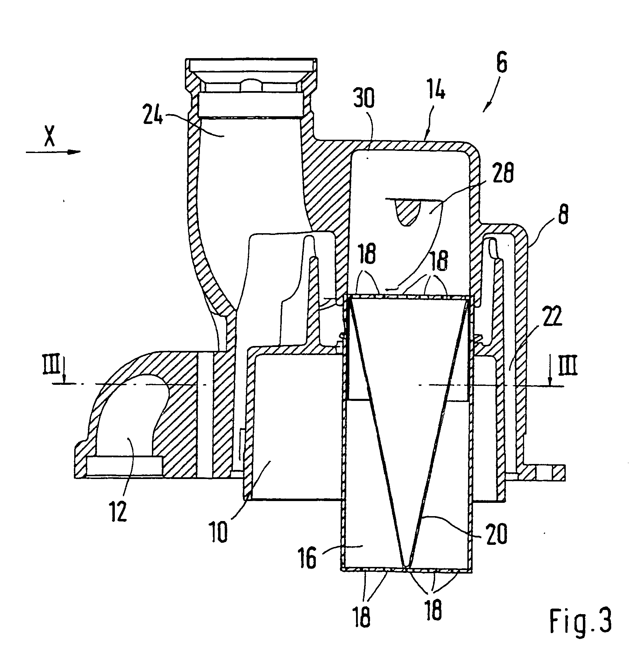

- Fig. 3: einen Längsschnitt durch die Ölabscheidevorrichtung,
- Fig. 4: einen Schnitt entlang der Linie III - III in Fig. 3,
- Fig. 5: eine Ansicht aus Richtung X in Fig. 3,
- Fig. 6: einen Schnitt entlang der Linie V - V in Fig. 5 und
- Fig. 7: eine Ansicht auf die Ölabscheidevorrichtung von unten.

In einem Getriebegehäuse 2 ist oberhalb des Bauraums für das Differential ein einstückig aus dem Getriebegehäuse 2 herausgebildeter Ölsammelraum, im folgenden als Öltank 4 bezeichnet, ausgebildet, der zur Aufnahme des für die Trockensumpf-Umlaufschmierung notwenigen Ölvorrats vorgesehen ist. Der Öltank 4 weist an seinem oberen Ende eine zentrale Öffnung auf, auf der ein Ölabscheider 6 aufgesetzt und befestigt ist. Im nachfolgenden wird der Aufbau des Ölabscheiders 6 näher beschrieben.

In dem zylinderförmig ausgebildeten Gehäuse 8 des Ölabscheiders 6 ist ein Zyklon - Entlüftungsraum 10 ausgebildet, der über einen im Gehäuse 8 ausgebildeten Anschlussstutzen 12 mit der Druckseite einer nicht dargestellten Ölabsaugpumpe in Verbindung steht, die das in einer Ölwanne der Brennkraftmaschine gesammelte Schmieröl in den Öltank 4 fördert. Die zylinderförmig ausgebildete Entlüftungskammer 10 weist einen domartig ausgebildeten Endabschnitt 14 auf, der in seinem Durchmesser gegenüber der Entlüftungskammer 10 reduziert ist. Am Ende des domartig ausgebildeten Endabschnitts 14 ist ein Entlüftungsrohr 16 eingesteckt bzw. befestigt, dessen beiden stirnseitigen Endabschnitte mit Öffnungen 18 versehen sind. Im Entlüftungsrohr 16 ist ein trichter- bzw. kegelförmig ausgebildeter Drahtgeflechtkörper 20 aufgenommen, der als Patrone in das Entlüftungsrohr 16 eingesetzt ist.

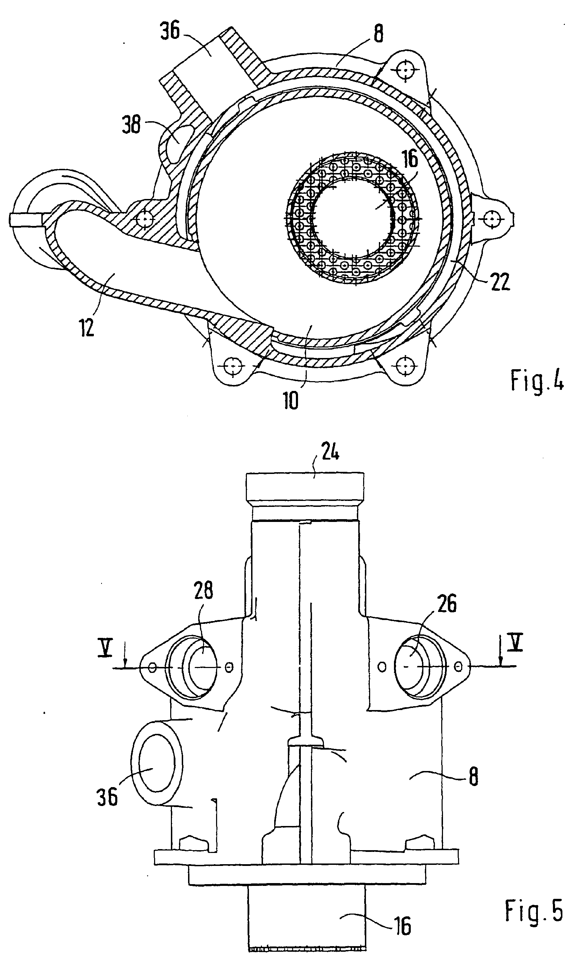

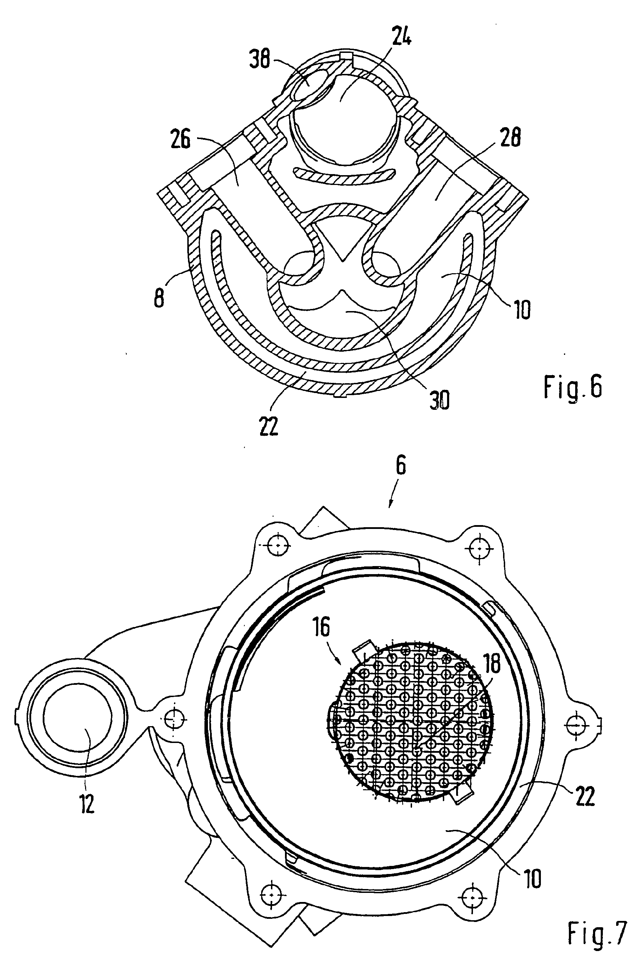

Das im Bereich der Entlüftungskammer 10 doppelwandig ausgebildete Gehäuse 8 des Ölabscheiders 6 weist einen koaxial zur Entlüftungskammer 10 ausgebildeten Ringkanal 22 auf, der an seinem oberen Ende mit einem Öleinfüllstutzen 24 und an seinem unteren, offenen Ende mit dem Öltank 4 in Verbindung steht. Wie in Fig. 5 und 6 dargestellt, weist das Gehäuse 8 zwei Anschlussstutzen 26 und 28 auf, die beide in die sich oberhalb des Entlüftungsrohres 16 ausbildende Kammer 30 einmünden. An beide Anschlussstutzen 26 und 28 ist jeweils ein Druckbegrenzungsventil 32 und 34 befestigt, die über entsprechende Leitungen (nicht dargestellt) mit der Sauganlage der Brennkraftmaschine verbunden sind. Am Gehäuse 8 des Ölabscheiders 6 ist ein dritter Anschlussstutzen 36 vorgesehen, der zur Kurbelgehäuseentlüftung einerseits mit dem Kurbelraum und andererseits mit dem Ringkanal 22 verbunden ist. Ein im Gehäuse 8 integrierter Kanal 38 dient als Entlüftung für eine über den Stutzen 24 erfolgende Befüllung des Öltanks 4 mit Schmieröl.

Im nachfolgenden wird die Funktionsweise der Ölabscheider/Nachfülleinrichtung näher erläutert:

Das aus dem Ölsumpf über den Anschlussstutzen 12 in den Öltank 4geförderte Schmieröl tritt tangential in den als Zyklonabscheider wirkenden Entlüftungsraum 10 ein, wobei das Öl aufgrund der Fliehkräfte entlang der Wandungen des Entlüftungsraumes 10 in den Öltank 4 strömt, während die ölhaltigen Gase über die im Entlüftungsrohr 16 angeordneten Öffnungen 18 durch das Entlüftungsrohr 16 und damit durch den Drahtgeflechtkörper 20 abströmen können. Dabei werden die Ölbestandteile am Drahtgeflecht aufgefangen und in den Öltank 4 zurückgeführt, während die vom Öl gereinigten Gase über die Entlüftungskammer 30 wieder der Ansauganlage der Brennkraftmaschine zugeführt werden. Da es zumindest in größeren Abständen erforderlich ist, Öl für die Schmierölversorgung der Brennkraftmaschine nachzufüllen, kann dies über den Öleinfüllstutzen 24 erfolgen.

## Patentansprüche

1. Vorrichtung zur Entschäumung bzw. Entlüftung von Öl im Schmiermittelkreislauf einer Brennkraftmaschine, bei der das in eine Ölwanne zurückfließende Schmieröl von einer Ölabsaugpumpe in einen separaten Öltank (4) förderbar ist, sowie mit einem vorzugsweise am Öltank (4) befestigten Ölabscheider (6) wobei der Ölabscheider (6) einen Entlüftungsraum (10) aufweist, **dadurch gekennzeichnet, dass** in dem Entlüftungsraum (10) in dem ein Drahtgeflechtkörper (20) aufgenommen ist.

2. Vorrichtung nach Anspruch 1, **dadurch gekennzeichnet, dass** der Drahtgeflechtkörper (20) trichterförmig ausgebildet ist und mit seinem schmaleren Ende in Richtung des Öltanks (4) weist.

3. Vorrichtung nach Anspruch 1 oder 2, **dadurch gekennzeichnet, dass** der Drahtgeflechtkörper (20) in einem Entlüftungsrohr (16) aufgenommen ist, welches zumindest stirnseitig mit Öffnungen (18) versehen ist.

4. Vorrichtung nach Anspruch 3, **dadurch gekennzeichnet, dass** die obere Stirnseite des Entlüftungsrohres (16) einen Teil - Entlüftungsraum (30) abtrennt, der an eine Unterdruckquelle angeschlossen ist.

5. Vorrichtung nach einem der vorhergehende Ansprüche, **dadurch gekennzeichnet, dass** der Entlüftungsraum (10) von einem Ringkanal (22) umschlossen ist, der mit einem Öleinfüllstutzen (24) verbunden ist.

6. Vorrichtung nach Anspruch 5, **dadurch gekennzeichnet, dass** der Ringkanal (22) einen Anschluss (36) für die Kurbelgehäuseentlüftung aufweist.

7. Vorrichtung nach einem der vorhergehenden Ansprüche, **dadurch gekennzeichnet, dass** der Öltank (4) im Getriebegehäuse (2) der Brennkraftmaschine ausgebildet ist.

## Claims

1. Apparatus for defoaming or ventilating oil in the lubricant circuit of an internal combustion engine, in which the lubricating oil which flows back into an oil sump can be conveyed by an oil extraction pump into a separate oil tank (4), and having an oil separator (6) which is preferably fastened to the oil tank (4), the oil separator (6) having a ventilating space (10), **characterized in that** a wire mesh body (20) is accommodated in the ventilating space (10).

2. Apparatus according to Claim 1, **characterized in that** the wire mesh body (20) is of funnel-shaped configuration and its narrower end points in the direction of the oil tank (4).

3. Apparatus according to Claim 1 or 2, **characterized in that** the wire mesh body (20) is accommodated in a ventilating pipe (16) which is provided with openings (18) at least on the end side.

4. Apparatus according to Claim 3, **characterized in that** the upper end side of the ventilating pipe (16) isolates a part ventilating space (30) which is connected to a vacuum source.

5. Apparatus according to one of the preceding claims, **characterized in that** the ventilating space (10) is enclosed by an annular channel (22) which is connected to an oil filler neck (24).

6. Apparatus according to Claim 5, **characterized in that** the annular channel (22) has a connection (36) for the crankcase ventilation.

7. Apparatus according to one of the preceding claims, **characterized in that** the oil tank (4) is formed in the transmission housing (2) of the internal combustion engine.

## Revendications

1. Dispositif pour démousser ou désaérer de l'huile dans un circuit de lubrifiant d'un moteur à combustion interne, dans lequel l'huile de lubrification refluant dans un carter d'huile peut être refoulée par une pompe d'aspiration d'huile dans un réservoir d'huile séparé (4), et comprenant un séparateur d'huile (6) fixé de préférence au réservoir d'huile (4), le séparateur d'huile (6) présentant un espace de désaérage (10), **caractérisé en ce qu'**un corps en treillis en fil métallique (20) est reçu dans l'espace de désaérage (10).

2. Dispositif selon la revendication 1, **caractérisé en ce que** le corps en treillis en fil métallique (20) est réalisé en forme d'entonnoir et est tourné avec son extrémité plus étroite dans la direction du réservoir d'huile (4).

3. Dispositif selon la revendication 1 ou 2, **caractérisé en ce que** le corps en treillis en fil métallique (20) est reçu dans un tube de désaérage (16) qui est pourvu au moins du côté frontal d'ouvertures (18).

4. Dispositif selon la revendication 3, **caractérisé en ce que** le côté frontal supérieur du tube de désaérage (16) sépare un espace de désaérage partiel (30), qui est raccordé à une source de dépression.

5. Dispositif selon l'une quelconque des revendications précédentes, **caractérisé en ce que** l'espace de désaérage (10) est entouré par un canal annulaire (22), qui est connecté à une tubulure de remplissage d'huile (24).

6. Dispositif selon la revendication 5, **caractérisé en ce que** le canal annulaire (22) présente un raccordement (36) pour le désaérage du carter de vilebrequin.

7. Dispositif selon l'une quelconque des revendications précédentes, **caractérisé en ce que** le réservoir d'huile (4) est réalisé dans la boîte de transmission (2) du moteur à combustion interne.
